# EUROPÄISCHE PATENTSCHRIFT

(11) **EP 1 569 311 B1**
(45) Veröffentlichungstag und Bekanntmachung des Hinweises auf die Patenterteilung: **13.12.2006**
(21) Anmeldenummer: 04405118.3
(22) Anmeldetag: 27.02.2004
(51) Int. Cl.: H02B 13/035, H01F 38/30

(54) **Kompaktes Stromwandlergehäuse für gasisolierte Schaltanlagen**
Compact current transformer housing for gas insulated switches
Enveloppe compacte d'un transformateur de courant pour interrupteurs isolés au gas

(43) Veröffentlichungstag der Anmeldung: 31.08.2005
(73) Patentinhaber: ABB Technology AG, 8050 Zürich (CH)
(72) Erfinder: Vrana, Ales, 8805 Richterswil (CH); Garcia, Miguel, 8600 Dübendorf (CH); Holaus, Walter, 8037 Zürich (CH); Baur, Urs, 8197 Rafz (CH)
(74) Vertreter: ABB Patent Attorneys

(56) Entgegenhaltungen:
- DE-A- 4 322 944
- DE-A- 10 015 800
- FR-A- 2 792 452

## Beschreibung

### TECHNISCHES GEBIET

Die Erfindung bezieht sich auf das Gebiet der Hochspannungstechnik, insbesondere auf elektrische Messtechnik in gekapselten gasisolierten Schaltanlagen (GIS). Sie geht aus von einem Stromwandlergehäuse und einer gasisolierten Schaltanlage gemäss Oberbegriff der unabhängigen Patentansprüche.

### STAND DER TECHNIK

In dem Artikel von M. Okabe et al., "Serialization of Standard Gas Insulated Switchgear", Hitachi Review Vol. 51 (2002), No. 5 wird eine gasisolierte Schaltanlage (GIS) offenbart. Die GIS umfasst Schalter und Stromschienen zur Energieverteilung. An Stromzuleitungen und Stromabgängen sind Stromwandler zur Strommessung angeordnet.

Typische Stromwandler haben Stromwandlerkerne aus Ferrit, die auf einem Kernträgerrohr sitzen und den Stromleiter ringförmig umschliessen. Die Stromwandlerkerne sind für verschiedene Strommessaufgaben und Strommessbereiche ausgelegt, so dass ein Stromwandler im allgemeinen Stromwandlerkerne unterschiedlicher Grösse und Anzahl benötigt. Zweiteilige Stromwandlerkerne sind ungenauer und teurer als einteilige. Einteilige Stromwandlerkerne müssen bei der Montage nacheinander auf das Kernträgerrohr aufgeschoben werden. Das befüllte Kernträgerrohr wird dann mit Verschraubungsflanschen am GIS-Gehäuse befestigt. Dabei muss der Innendurchmesser der einteiligen Stromwandlerkerne grösser sein als der Aussendurchmesser der Verschraubungsflansche. Dies bedingt einen entsprechend grossen Bauraum für das Stromwandlergehäuse und entsprechende Kosten für den Stromwandler.

Eine im Stand der Technik bekannte Lösung für dieses Problem besteht darin, dass das Kernträgerrohr zweiteilig ist, in der Mitte einen die beiden Hälften verbindenden Verschraubungsflansch aufweist, die beiden Hälften zum Verschraubungsflansch hin verjüngt sind und dadurch der Aussendurchmesser des Verschraubungsflansches reduziert ist. Nachteilig ist, dass im Verjüngungsbereich der Abstand zwischen Aktivteilen und Gehäuse der GIS reduziert und die Gefahr elektrischer Überschläge erhöht ist.

In der DE 100 15 800 A1 wird ein Kapselungsbaustein zur Aufnahme von Stromwandlerkernen in gasisolierten Hochspannungsschaltanlagen offenbart. Der Kapselungsbaustein ist über einen kleinen und grossen Anschlussflansch mit dem Gehäuse der Schaltanlage verbunden. Im Innern ist ein Tragrohr vorhanden, auf welches die Stromwandler von einer freien Seite her aufgeschoben sind. Die Befüllungsöffnung am Tragrohr wird dann mit einer Elektrode versehen. Der Kapselungsbaustein steht in Gasaustausch mit dem Gasraum der Schaltanlage.

In der Erfindung wird Bezug genommen auf die DE-43-22 944 A1. Dort wird ebenfalls ein Stromwandlergehäuse offenbart, das an eine gasisolierte Schaltanlage angeflanscht ist. Die Stromwandlerkerne sind wiederum von einer freien Seite her auf ein Tragrohr aufgeschoben. Die Befüllungsöffnung weist eine Stufung zur Ausbildung zweier rohrförmiger Kondensatorelektroden zur Auskopplung von Betriebsströmen auf. Das Tragrohr weist zudem an seiner Befüllungsöffnung einen Isolierstützer und einen das Tragrohr von aussen umgreifenden Kapselungsflansch des Schaltanlagengehäuses auf, der über stromleitende, axiale Zugkraft übertragende Metallstangen mit einem gegenüberliegenden Flansch des Stromwandlergehäuses verbunden ist.

### DARSTELLUNG DER ERFINDUNG

Aufgabe der vorliegenden Erfindung ist es, einen kompakteren Stromwandler für gasisolierte Schaltanlagen anzugeben. Diese Aufgabe wird erfindungsgemäss durch die Merkmale der unabhängigen Ansprüche gelöst.

Die Erfindung besteht in einem Stromwandler, insbesondere für gasisolierte gekapselte Hochspannungsschaltanlagen, mit einem Stromwandlergehäuse und umfassend mindestens einen Stromwandlerkern, der auf einem Kernträgerrohr angeordnet ist und zum Erfassen eines Stroms durch einen Stromleiter der Schaltanlage dient, wobei das Kernträgerrohr eine Befüllungsöffnung zum Aufschieben des Stromwandlerkerns auf das Kernträgerrohr aufweist und das Kernträgerrohr über Flansche mit einem GIS-Gehäuse der Schaltanlage verbindbar ist, wobei ferner an der Befüllungsöffnung eine axiale Kräfte aufnehmende Befestigungskontur vorhanden ist, deren Aussendurchmesser kleiner als ein Aussendurchmesser eines Montageflansches für das Kernträgerrohr, d. h. kleiner als ein Flansch-Aussendurchmesser, ist und an der Befestigungskontur ein Befestigungsmittel befestigbar ist, das zur Montage des Kernträgerrohrs im Bereich der Befüllungsöffnung dient. Mit Flansch-Aussendurchmesser wird Bezug genommen auf den Aussendurchmesser eines gewöhnlichen, für die zu betrachtende Schaltanlage typischen, beispielsweise durch axiale Schrauben o. ä. anzuflanschenden Flansches. Der Aussendurchmesser der Befestigungskontur soll also kleiner sein als derjenige eines herkömmlichen Montageflansches für das Kernträgerrohr. Anders gesagt soll die Befestigungskontur einen nur unwesentlich grösseren Aussendurchmesser haben als das Kontaktrohr, d. h. als derjenige Aussendurchmesser, der für die Aufnahme und den Sitz der aufzuschiebenden Stromwandlerkerne relevant ist. Durch die Erfindung werden verschiedene Vorteile erreicht. Der Bauraum für aufzuschiebende Stromwandlerkerne wird bei sonst gleichen Abmessungen um die Höhendifferenz zwischen der erfindungsgemässen Befestigungskontur und einem herkömmlichen Flansch vergrössert. Die Kosten für alle Stromwandlerkerne werden verringert, da bei kleinerem Innendurchmesser weniger Eisenkernmaterial benötigt wird. Zudem wird eine sehr einfache Montierbarkeit und Demontierbarkeit des Stromwandlers und besonders seiner Stromwandlerkerne erreicht. Insgesamt wird eine sehr kompakte Bauweise realisiert und viel Bauraum für die Stormwandlerkerne im Stromwandlergehäuse zur Verfügung gestellt.

Gemäß der Erfindung stellt das Befestigungsmittel nach seiner Befestigung an der Befestigungskontur einen Montageflansch zur Montage des Kernträgerrohrs im Bereich der Befüllungsöffnung am GIS-Gehäuse zur Verfügung. Der solcherart nachträglich, d. h. nach Aufschieben der Wandlerkerne, zu befestigende Montageflansch begrenzt also nicht mehr das Wandler-Bauvolumen. Vielmehr kann der an der Befestigungskontur zur befestigende Montageflansch einen Aussendurchmesser grösser als der Innendurchmesser der Wandlerkerne haben, weil die Wandlerkerne nicht über diesen Montageflansch geschoben werden müssen.

In einem Ausführungsbeispiel weist die Befestigungskontur an der Befüllungsöffnung einen radial nach aussen vorstehenden Vorsprung auf, der in eine Nut am Befestigungsmittel eingrifft und axiale Zugkräfte, die auf das Befestigungsmittel wirken, auf das Kernträgerrohr überträgt. Durch Vorsprung und Nut wird bei minimaler Bauhöhe eine maximale mechanische Zugfestigkeit für den nachträglich befestigbaren Montageflansch realisiert.

Die Ansprüche 4-5 betreffen Ausführungsbeispiele, bei denen ein mehrteiliges Befestigungsmittel an der Befestigungskontur befestigt wird und mit Hilfe des mehrteiligen Befestigungsmittels ein Montageflansch geschaffen wird.

Die Ansprüche 6-7 betreffen Ausführungsbeispiele, bei denen ein einteiliges Befestigungsmittel mit einer mit mehreren Befestigungsabschnitten versehenen Befestigungskontur zusammenwirken, insbesondere nach Art eines Bajonettverschlusses.

Anspruch 9 betrifft eine elektrische Schaltanlage umfassend einen Stromwandler wie zuvor beschrieben und mit den dort genannten Vorteilen.

Weitere Ausführungen, Vorteile und Anwendungen der Erfindung ergeben sich aus den abhängigen Ansprüchen, aus den Anspruchskombinationen sowie aus der nun folgenden Beschreibung und den Figuren.

### KURZE BESCHREIBUNG DER ZEICHNUNGEN

Die Figuren zeigen schematisch in
- Fig. 1: im Querschnitt ein Stromwandlergehäuse gemäss Stand der Technik mit mehreren Stromwandlerkernen, die zwischen zwei Verschraubungsflanschen montiert sind;
- Fig. 2: im Querschnitt ein Stromwandlergehäuse gemäss Stand der Technik mit einem zweiteiligen, zur Mitte hin verjüngten Kernträgerrohr; und
- Fig. 3a-3d: ein erfindungsgemässes Stromwandlergehäuse mit nachträglich befestigbarem Klemmflansch im Querschnitt (Fig. 3a) und Detailausschnitte in Draufsicht (Fig. 3b-3d).

In den Figuren sind gleiche Teile mit gleichen Bezugszeichen versehen.

### WEGE ZUR AUSFÜHRUNG DER ERFINDUNG

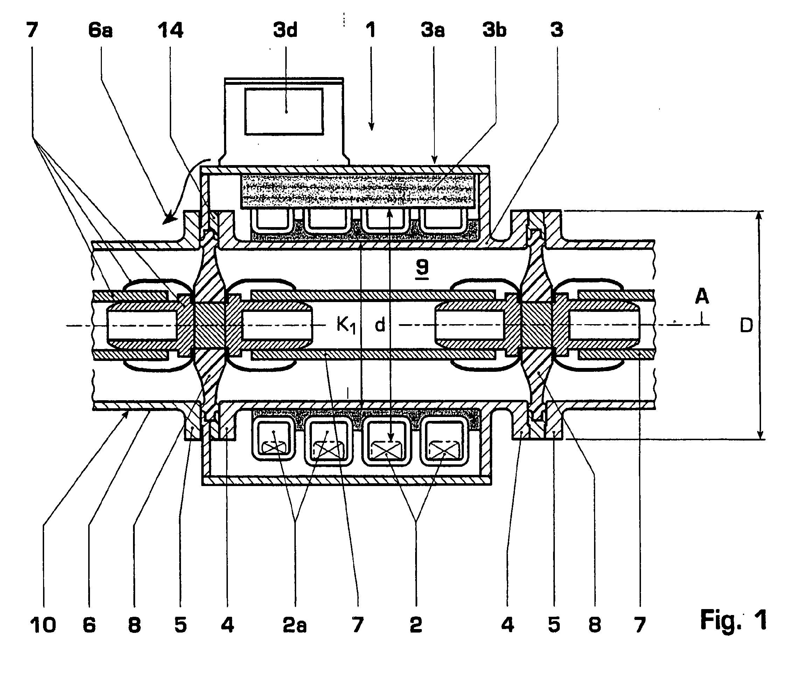

Fig. 1 zeigt einen herkömmlichen Stromwandler 1 in einer gekapselten gasisolierten Schaltanlage 10. Das Gehäuse 6 der gasisolierten Schaltanlage 10 umschliesst einen Gasraum 9, der bevorzugt mit SF₆-Gas unter einigen bar Druck gefüllt ist. Die Längsachse A des Schaltanlagenabschnitts 10 ist im vorliegenden Fall entlang des Stromleiters 7 erstreckt. Die Aktivteile oder Stromleiter 7 sind von Isolatoren 8, insbesondere Stützisolatoren 8 und Schottisolatoren 8, im gasgefüllten Innenraum 9 der Kapselung 6 gehaltert. Die Isolatoren 8 sind ihrerseits mittels Isolatorflanschen 8a an der GIS-Kapselung 6 abgestützt.

Der Stromwandler 1 mit seinem Stromwandlergehäuse 3a ist am GIS-Gehäuse 6 über einen Montageflansche 4, 5 befestigt. Wie gezeigt können die Isolatorflansche 8a mit den Montageflanschen 4, 5 des Stromwandlers 1 zusammengeflanscht sein. Das Stromwandlergehäuse 3a beherbergt aufzuschiebende, insbesondere einteilige Stromwandlerkerne 2, denen ein Bauvolumen 3b zur Verfügung steht. Das Bauvolumen 3b ist radial nach innen dadurch begrenzt, dass fürs Aufschieben der Wandlerkerne 2 auf das Kernträgerrohr 3 deren Innendurchmesser d grösser sein muss als der Aussendurchmesser der Montageflansche 4, 5. Im vorliegenden Fall sind nämlich die Montageflansche 4, 5 einstückig mit dem Kernträgerrohr 3 ausgebildet. Der Aussendurchmesser des Kernträgerrohrs 3 ist mit K₁ bezeichnet. Nicht aufzuschiebenden zweiteiligen Wandlerkernen steht das nach innen grössere Bauvolumen 2a zur Verfügung. Selbstverständlich ist ein für die Aufnahme der Stromwandlerkerne 2 relevanter Aussendurchmesser K₁ des Kernträgerrohrs 11 kleiner als ein Innendurchmesser d der Stromwandlerkerne 2 gewählt. 3d bezeichnet einen Klemmenkasten für den Stromwandler 1. Alle Stromwandlerkerne 2 sind ausserhalb des SF₆-Gasraums 9 angeordnet. Eine Erdstrom-Isolation 14 sorgt dafür, dass der Rückstrom auf Erdpotential via GIS-Kapselung 6 ausserhalb der Stromwandlerkerne 2 über das Stromwandlergehäuse 3a geführt wird. Dadurch wird der zu messende Strom durch die Aktivteile 7 von den Stromwandlerkernen 2 korrekt erfasst.

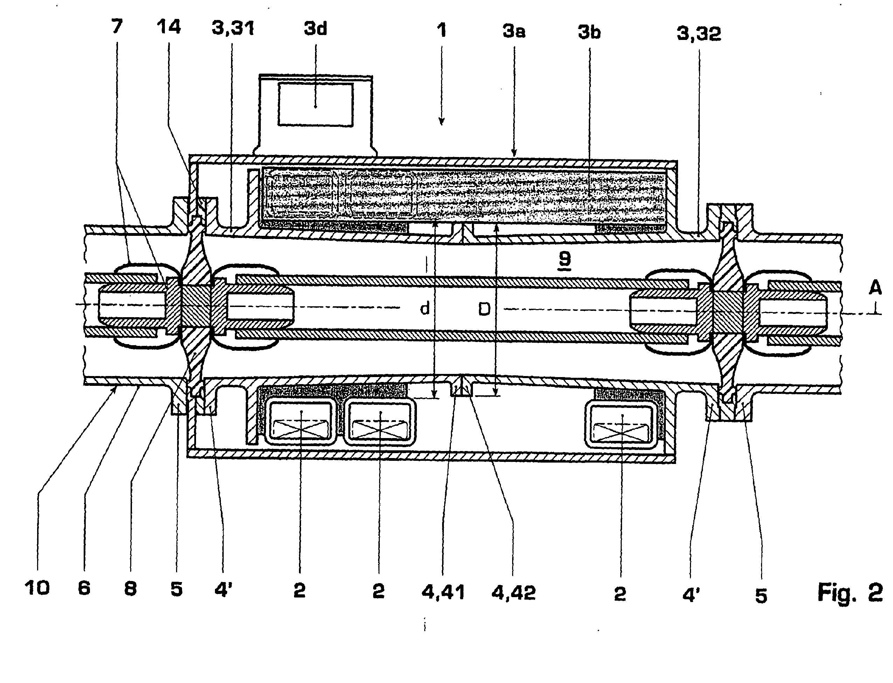

In Fig. 2 ist ebenfalls ein herkömmliches Stromwandlergehäuse 3a gezeigt, bei dem jedoch das Kernträgerrohr zweiteilig ist und die beiden Hälften 31, 32 in der Mitte über einen Flansch 41, 42 miteinander gasdicht verbunden sind. Das Problem des Flansch-Aussendurchmessers D ist dadurch gemildert, dass die Kernträgerrohrhälften 41, 42 zur Mitte hin verjüngt sind. Dies führt im Gasraum 9 zu erhöhten E-Feldstärken und ist dielektrisch unvorteilhaft.

In beiden Beispielen sind die für das Aufschieben der Stromwandlerkerne 2 relevanten Montagflansche 4; 41, 42 einstückig mit dem Kernträgerrohr 3; 31, 32 ausgeführt. Die Montageflansche 4; 41, 42 am Kernträgerrohr 3 sind typischerweise Verschraubungsflansche 4; 41, 42, die durch axial angeordnete Schrauben o. ä. anflanschbar sind. Die Montageflansche 4; 41, 42 benötigen zwingend einen minimal erforderlichen Überstand über den Aussendurchmesser K₁ des Kernträgerrohrs 3. Dieser Überstand macht sich immer als Verlust an Bauvolumen für die Stromwandlerkerne 2 bemerkbar.

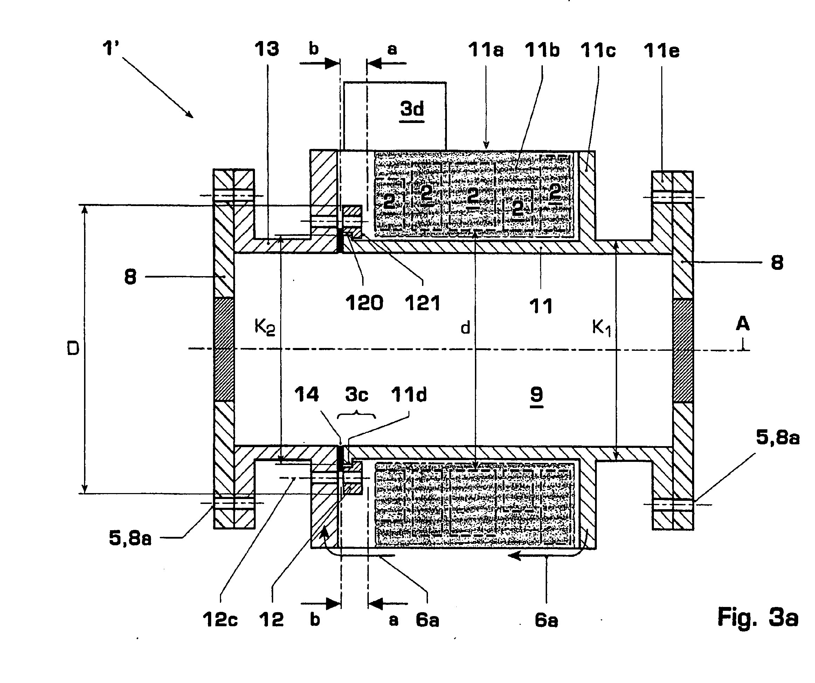

Fig. 3a-3d zeigt Ausführungsformen zu der Erfindung. Wiederum umfasst der Stromwandler 1' ein Stromwandlergehäuse 11a, ein Bauvolumen 11b für einteilige Stromwandlerkerne 2, eine Stromwandlergehäuse-Seitenwand 11c, eine Erdstrom-Isolation 14, um Erdstrom 6a ausserhalb der Stromkerne 2 über das Stromwandlergehäuse 11a zurückzuführen, und einen am Kernträgerrohr 11 fixierten Kernträger-Montagflansch 11e. Die Erfindung besteht darin, dass an der Befüllungsöffnung 3c eine axiale Kräfte aufnehmende Befestigungskontur 11d vorhanden ist, deren Aussendurchmesser K₂ kleiner ist als ein Aussendurchmesser D eines Montageflansches 11e, 12, 12', 13; 5 für das Kernträgerrohr 11, und dass an der Befestigungskontur 11d ein Befestigungsmittel 12, 12' befestigbar ist, das zur Montage des Kernträgerrohrs 11 im Bereich der Befüllungsöffnung 3c dient. Der Montageflansch 12, 12' ist also abnehmbar. Das Bauvolumen 2a für aufzuschiebende Wandlerkerne 2 ist daher radial nach innen nur noch durch die Höhe oder den Aussendurchmesser K₂ der Befestigungskontur 11d an der Befüllungsöffnung 3c begrenzt. Hierzu im folgenden einige Ausführungsbeispiele.

Die Befestigungskontur 11d kann, wie in Fig. 3a-3d dargestellt, an der Befüllungsöffnung 3c einen radial nach aussen vorstehenden Vorsprung 11d, 110d aufweisen, der in eine Nut 120, 120' am Befestigungsmittel 12, 12' eingreift und axiale Zugkräfte, die auf das Befestigungsmittel 12, 12' wirken, auf das Kernträgerrohr 11 überträgt. Die Befestigungskontur 11d kann auch eine Oberflächenstruktur sein oder umfassen, die eine Oberflächenrauhigkeit oder Verzahnungsstruktur zur radialen Anklemmung eines befestigbaren Montageflansches aufweist und dadurch zur Aufnahme axialer Kräfte und zu deren Übertragung auf den Montageflansch dient. Auf diese Weise wird eine minimale Bauhöhe oder ein minimaler Aussendurchmesser K₂ für die Befestigungskontur 11d erreicht.

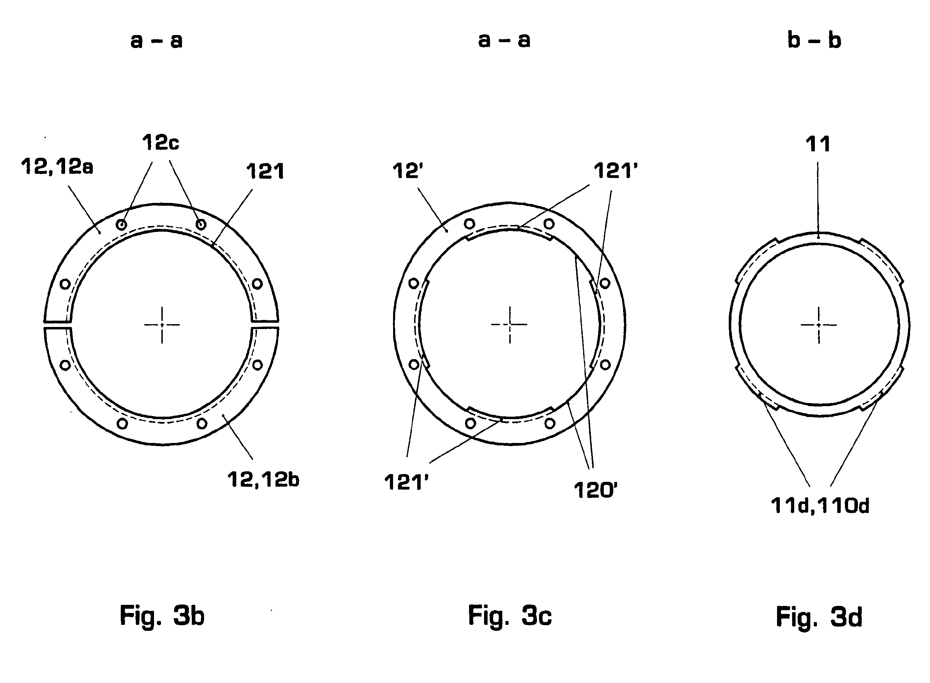

Gemäss Fig. 3a, 3b kann der Vorsprung 11d um die Befüllungsöffnung 3c herum ringförmig geschlossen sein und das Befestigungsmittel 12 kann zweiteilig, insbesondere halbringförmig, oder vielteilig (nicht dargestellt) sein. Bevorzugt ist das Befestigungsmittel 12 zur Befestigung an der Befestigungskontur 11d radial von aussen an die Befestigungskontur 11d zuführbar oder heranführbar. Mit Vorteil ist das Befestigungsmittel 12 ein Klemmflansch 12, der radial auf die Befestigungskontur 11d klemmbar ist. Hierfür weist der Klemmflansch 12 einen zum Vorsprung 11d komplementären Rücksprung 120 oder eine Nut 120 auf sowie eine sich in axialer Richtung auf dem Vorsprung 11d abstützende, hier halbringförmige Nase 121. Insbesondere ist der Klemmflansch 12 axial mit Montagemitteln 12c, z. B.

Schrauben 12c, an einem Gegenflansch 13, 5, 8a anflanschbar und wird dadurch auch radial an die Befestigungskontur 11d angeklemmt.

Gemäss Fig. 3a in Verbindung mit Fig. 3c und 3d kann der Vorsprung 11d auch um die Befüllungsöffnung 3c herum teilringartige Vorsprungsabschnitte 110d aufweisen und kann das Befestigungsmittel 12' einteilig sein. Vorzugsweise ist dann das Befestigungsmittel 12' ein Drehflansch 12', der den Vorsprungsabschnitten 110d entsprechende teilringartige Nutabschnitte 120' (bzw. komplementäre teilringartige vorstehende Abschnitte 121') aufweist, wobei die Nutabschnitte 120' zum Eingreifen in die Vorsprungsabschnitte 110d nach Art eines Bajonettverschlusses dienen.

In einem weiteren Ausführungsbeispiel ist zur Befestigung des Kernträgerrohrs 11 im Bereich der Befüllungsöffnung 3c am GIS-Gehäuse 6 ein ringförmiger Zwischenflansch 13 zwischen dem Kernträgerrohr 11 und dem GIS-Gehäuse 6 angeordnet und beidseitig anflanschbar, der insbesondere als Gegenflansch 13, 5, 8a zum als Montageflansch 12, 12' wirksamen Befestigungsmittel 12, 12' dient. Der Zwischenflansch 13 kann ein einseitiger Einfachflansch oder, wie dargestellt, ein U-förmiger Zwischenflansch 13 sein. Ferner kann der Zwischenflansch 13 ein separater Flansch 13 sein oder mit einem anderen Flansch, z. B. einem Isolatorflansch 8a, einstückig sein. Der Zwischenflansch 13 kann auch gänzlich entfallen.

Der Stromwandler 1' ist besonders für gasisolierte Mittel- oder Hochspannungsschaltanlagen 10 geeignet. Beansprucht wird auch eine Schaltanlage 10 mit einem solchen Stromwandler 1'.

### BEZUGSZEICHENLISTE

- 1: Herkömmlicher Stromwandler
- 1': Erfindungsgemässer Stromwandler
- 2: Einteilige Stromwandlerkerne, aufzuschiebende Stromwandlerkerne
- 2a: Aufnahmevolumen für zweiteilige Stromwandlerkerne
- 3: Kernträgerrohr
- 31, 32: Kernträgerrohrhälfte
- 3a: Stromwandlergehäuse
- 3b: Bauraum für einteilige (aufzuschiebende) Stromwandlerkerne
- 3c: Öffnung zum Aufschieben von Stromwandlerkernen, Befüllungsöffnung
- 3d: Stromwandler-Klemmenkasten
- 4: Kernträgerrohrflansch, endseitiger Verschraubungsflansch
- 41, 42: Kernträgerrohrflansch, mittige Verschraubungsflansche
- 5: Gegenflansch am GIS-Gehäuse
- 6: GIS-Gehäuse
- 6a: Kapselungsstromverbindung
- 7: Aktivteile, Stromleiter
- 8: Isolator, Stützisolator, Schottisolator
- 8a: Isolatorflansch
- 9: Gasraum, SF₆
- 10: Gasisolierte Schaltanlage
- 11: Kernträger
- 11a: Stromwandlergehäuse
- 11b: Bauraum für Stromwandlerkerne
- 11c: Stromwandlergehäuse-Seitenwand
- 11d: Befestigungskontur; Absatz, Vorsprung für Klemmflansch, Klemmnase
- 110d: Befestigungskontur (teilringartig)
- 11e: Kernträger-Montageflansch
- 12: Befestigungsmittel, Klemmflansch
- 12': Befestigungsmittel, Drehflansch
- 120: Rücksprung, Nut (ringförmig)
- 121: Vorsprung, Nase (ringförmig)
- 120': Rücksprungsabschnitt, Nutabschnitt (teilringartig)
- 121': Vorsprungsabschnitt (teilringartig)
- 12a, 12b: Klemmflanschhalbringe, Klemmflanschelemente
- 12c: Montagemittel für Klemmflansch, Schrauben
- 13: Zwischenflansch
- 14: Erdstrom-Isolation
- A: Längsachse des Schaltanlagenabschnitts
- d: Innendurchmesser der Stromwandlerkerne
- D: Aussendurchmesser der Verschraubungsflansche, Innendurchmesser des Bauvolumens für einteilige Stromwandlerkerne
- K₁: Kernträgerrohraussendurchmesser
- K₂: Aussendurchmesser der Befestigungskontur, Klemmnasenaussendurchmesser

## Patentansprüche

1. Stromwandler (1') für gasisolierte gekapselte Hochspannungsschaltanlagen (10), mit einem Stromwandlergehäuse (11a) und umfassend mindestens einen Stromwandlerkern (2), der auf einem Kernträgerrohr (11) angeordnet ist und zum Erfassen eines Stroms durch einen in dem Gasraum (9) gehalterten Stromleiter (7) dient, wobei das Kernträgerrohr (11) eine Befüllungsöffnung (3c) zum Aufschieben des Stromwandlerkerns (2) auf das Kernträgerrohr (11) aufweist und das Kernträgerrohr (11) über Montageflansche (11e, 12, 12', 13; 5) mit einem GIS-Gehäuse (6) der Schaltanlage (10) verbindbar ist, **dadurch gekennzeichnet, dass**
a) an der Befüllungsöffnung (3c) eine axiale Kräfte aufnehmende Befestigungskontur (11d) vorhanden ist und
b) an der Befestigungskontur (11d) ein Befestigungsmittel (12, 12') befestigbar ist, das zur Montage des Kernträgerrohrs (11) im Bereich der Befüllungsöffnung (3c) dient, wobei das Befestigungsmittel (12, 12') nach seiner Befestigung an der Befestigungskontur (11d) einen abnehmbaren Montageflansch (12, 12') zur Montage des Kernträgerrohrs (11) im Bereich der Befüllungsöffnung (3c) am GIS-Gehäuse (6) zur Verfügung stellt, wobei ferner der Aussendurchmesser (K₂) der Befestigungskontur (11d) kleiner als ein Aussendurchmesser (D) des Montageflansches (12, 12') für das Kernträgerrohr (11) ist.

2. Der Stromwandler (1') nach Anspruch 1, **dadurch gekennzeichnet, dass**
a) durch den Aussendurchmesser (K₂) der Befestigungskontur (11d) ein Bauraum (3b) für einteilige Stromwandlerkerne (2) radial nach innen begrenzt ist und/oder
b) der Aussendurchmesser (K₂) an der Befüllungsöffnung (3c) durch einen radial nach aussen vorstehenden Vorsprung (11d, 110d) gegeben ist.

3. Der Stromwandler (1') nach einem der vorangehenden Ansprüche, **dadurch gekennzeichnet, dass** die Befestigungskontur (11d) an der Befüllungsöffnung (3c) einen radial nach aussen vorstehenden Vorsprung (11d, 110d) aufweist, der in eine Nut (120, 120') am Befestigungsmittel (12, 12') eingreift und axiale Zugkräfte, die auf das Befestigungsmittel (12, 12') wirken, auf das Kernträgerrohr (11) überträgt.

4. Der Stromwandler (1') nach Anspruch 3, **dadurch gekennzeichnet, dass** der Vorsprung (11d) um die Befüllungsöffnung (3c) herum ringförmig geschlossen ist und das Befestigungsmittel (12) zweiteilig, insbesondere halbringförmig, oder vielteilig ist.

5. Der Stromwandler (1') nach Anspruch 4, **dadurch gekennzeichnet, dass**
a) das Befestigungsmittel (12) radial von aussen an die Befestigungskontur (11d) heranführbar ist und/oder
b) das Befestigungsmittel (12) ein Klemmflansch (12) ist, der radial auf die Befestigungskontur (11d) klemmbar und insbesondere axial mit Montagemitteln (12c) an einem Gegenflansch (13, 5, 8a) anflanschbar ist.

6. Der Stromwandler (1') nach Anspruch 3, **dadurch gekennzeichnet, dass** der Vorsprung (11d) um die Befüllungsöffnung (3c) herum teilringartige Vorsprungsabschnitte (110d) aufweist und das Befestigungsmittel (12') einteilig ist.

7. Der Stromwandler (1') nach Anspruch 6, **dadurch gekennzeichnet, dass** das Befestigungsmittel (12') ein Drehflansch (12') ist, der den Vorsprungsabschnitten (110d) entsprechende teilringartige Nutabschnitte (120') zum Eingreifen in die Vorsprungsabschnitte (110d) aufweist.

8. Der Stromwandler (1') nach einem der vorangehenden Ansprüche, **dadurch gekennzeichnet, dass** zur Befestigung des Kernträgerrohrs (11) im Bereich der Befüllungsöffnung (3c) am GIS-Gehäuse (6) ein ringförmiger Zwischenflansch (13) zwischen dem Kernträgerrohr (11) und dem GIS-Gehäuse (6) angeordnet und beidseitig anflanschbar ist, der insbesondere als Gegenflansch (13, 5, 8a) zum als Montageflansch (12, 12') wirksamen Befestigungsmittel (12, 12') dient.

9. Elektrische Schaltanlage (10), insbesondere Hoch- oder Mittelspannungsschaltanlage (10), **gekennzeichnet durch** einen Stromwandler (1') gemäss einem der vorangehenden Ansprüche.

## Claims

1. Current transformer (1') for gas-insulated, encapsulated high-voltage switchgear assemblies (10), having a current-transformer housing (11a) and comprising at least one current-transformer core (2), which is arranged on a tubular core mount (11) and is used for detecting a current through a current conductor (7) held in the gas chamber (9), the tubular core mount (11) having a filling opening (3c) for pushing the current-transformer core (2) onto the tubular core mount (11), and it being possible for the tubular core mount (11) to be connected to a GIS housing (6) of the switchgear assembly (10) via mounting flanges (11e, 12, 12', 13; 5), **characterized in that**
a) a fixing contour (11d) absorbing axial forces is provided at the filling opening (3c), and
b) a fixing means (12, 12') can be fixed to the fixing contour (11d) and is used for mounting the tubular core mount (11) in the region of the filling opening (3c), the fixing means (12, 12'), once it has been fixed to the fixing contour (11d), making available a removable mounting flange (12, 12') for mounting the tubular core mount (11) in the region of the filling opening (3c) on the GIS housing (6), in addition the outer diameter (K₂) of the fixing contour (11d) being smaller than an outer diameter (D) of the mounting flange (12, 12') for the tubular core mount (11).

2. Current transformer (1') according to Claim 1, **characterized in that**
a) a physical space (3b) for integral current-transformer cores (2) is delimited radially inwards by the outer diameter (K₂) of the fixing contour (11d), and/or
b) the outer diameter (K₂) at the filling opening (3c) is given by a projection (11d, 110d), which protrudes radially outwards.

3. Current transformer (1') according to one of the preceding claims, **characterized in that** the fixing contour (11d) has a projection (11d, 110d), which protrudes radially outwards, at the filling opening (3c), said projection (11d, 110d) engaging in a groove (120, 120') in the fixing means (12, 12') and transmitting axial tensile forces, which act on the fixing means (12, 12'), to the tubular core mount (11).

4. Current transformer (1') according to Claim 3, **characterized in that** the projection (11d) is closed in the form of a ring around the filling opening (3c), and the fixing means (12) comprises two parts, in particular is in the form of a half-ring, or comprises many parts.

5. Current transformer (1') according to Claim 4, **characterized in that**
a) the fixing means (12) can be led up radially from the outside to the fixing contour (11d), and/or
b) the fixing means (12) is a clamping flange (12), which can be clamped radially onto the fixing contour (11d) and in particular can be flange-connected axially to an opposing flange (13, 5, 8a) with mounting means (12c).

6. Current transformer (1') according to Claim 3, **characterized in that** the projection (11d) has projection sections (110d) in the form of partial rings around the filling opening (3c), and the fixing means (12') is integral.

7. Current transformer (1') according to Claim 6, **characterized in that** the fixing means (12') is a rotary flange (12'), which has groove sections (120'), which are in the form of partial rings and correspond to the projection sections (110d), for the purpose of engaging with the projection sections (110d).

8. Current transformer (1') according to one of the preceding claims, **characterized in that**, in order to fix the tubular core mount (11) in the region of the filling opening (3c) on the GIS housing (6), an intermediate flange (13) in the form of a ring is arranged between the tubular core mount (11) and the GIS housing (6), can be flange-connected on both sides and is used in particular as the opposing flange (13, 5, 8a) for the fixing means (12, 12') acting as the mounting flange (12, 12').

9. Electrical switchgear assembly (10), in particular high-voltage or medium-voltage switchgear assembly (10), **characterized by** a current transformer (1') according to one of the preceding claims.

## Revendications

1. Transformateur d'intensité (1') pour équipements de commutation à haute tension (10) blindés à isolation gazeuse, comprenant un boîtier de transformateur d'intensité (11a) et englobant au moins un noyau de transformateur d'intensité (2) qui est disposé sur un tube support de noyau (11) et sert à détecter un courant à travers un conducteur électrique (7) maintenu dans l'espace à gaz (9), le tube support de noyau (11) présentant une ouverture de remplissage (3c) destinée à enfiler le noyau de transformateur d'intensité (2) sur le tube support de noyau (11) et le tube support de noyau (11) peut être relié par le biais de brides de montage (11e, 12, 12', 13 ; 5) avec un boîtier GIS (6) de l'équipement de commutation (10),
**caractérisé en ce que**
a) un profilé de fixation (11d) absorbant les forces axiales est présent sur l'ouverture de remplissage (3c) et
b) sur le profilé de fixation (11d) peut être fixé un moyen de fixation (12, 12') qui sert au montage du tube support de noyau (11) dans la zone de l'ouverture de remplissage (3c), le moyen de fixation (12, 12'), après sa fixation au profilé de fixation (11d), fournissant une bride de montage amovible (12, 12') pour le montage du tube support de noyau (11) dans la zone de l'ouverture de remplissage (3c) sur le boîtier GIS (6), le diamètre extérieur (K₂) du profilé de fixation (11d) étant en outre inférieur à un diamètre extérieur (D) de la bride de montage (12, 12') pour le tube support de noyau (11).

2. Transformateur d'intensité (1') selon la revendication 1, **caractérisé en ce que**
a) un espace de montage (3b) pour des noyaux de transformateur d'intensité (2) monobloc est délimité dans le sens radial vers l'intérieur par le diamètre extérieur (K₂) du profilé de fixation (11d) et/ou
b) le diamètre extérieur (K₂) au niveau de l'ouverture de remplissage (3c) est donnée par un élément en saillie (11d, 110d) qui dépasse dans le sens radial vers l'extérieur.

3. Transformateur d'intensité (1') selon l'une des revendications précédentes, **caractérisé en ce que** le profilé de fixation (11d) sur l'ouverture de remplissage (3c) présente un élément en saillie (11d, 110d) qui dépasse dans le sens radial vers l'extérieur, lequel pénètre dans une rainure (120, 120') sur le moyen de fixation (12, 12') et transmet au tube support de noyau (11) les forces de traction axiales qui agissent sur le moyen de fixation (12, 12').

4. Transformateur d'intensité (1') selon la revendication 3, **caractérisé en ce que** l'élément en saillie (11d) est fermé en forme d'anneau autour de l'ouverture de remplissage (3c) et le moyen de fixation (12) est en deux parties, notamment en forme de demi-anneau, ou en quatre parties.

5. Transformateur d'intensité (1') selon la revendication 4, **caractérisé en ce que**
a) le moyen de fixation (12) peut être amené dans le sens radial depuis l'extérieur contre le profilé de fixation (11d) et/ou
b) le moyen de fixation (12) est une bride de serrage (12) qui peut être serrée dans le sens radial sur le contour de fixation (11d) et qui peut notamment être bridée dans le sens axial sur une contre-bride (13, 5, 8a) avec des moyens de montage (12c).

6. Transformateur d'intensité (1') selon la revendication 3, **caractérisé en ce que** l'élément en saillie (11d) présente autour de l'ouverture de remplissage (3c) des sections d'élément en saillie (110d) de type anneau partiel et le moyen de fixation (12') est en une seule pièce.

7. Transformateur d'intensité (1') selon la revendication 6, **caractérisé en ce que** le moyen de fixation (12') est une bride pivotante (12') qui présente les sections de rainure (120') de type anneau partiel correspondant aux sections d'élément en saillie (110d) destinées à venir en prise avec les sections d'élément en saillie (110d).

8. Transformateur d'intensité (1') selon l'une des revendications précédentes, **caractérisé en ce que** pour la fixation du tube support de noyau (11) dans la zone de l'ouverture de remplissage (3c) sur le boîtier GIS (6), une bride intermédiaire annulaire (13) est disposée entre le tube support de noyau (11) et le boîtier GIS (6) et peut être bridée des deux côtés, laquelle sert notamment de contre-bride (13, 5, 8a) pour le moyen de fixation (12, 12') faisant office de bride de montage (12, 12').

9. Équipement de commutation électrique (10), notamment équipement de commutation à haute ou à moyenne tension (10), **caractérisé par** un transformateur d'intensité (1') selon l'une des revendications précédentes.
